(19)

Europäisches
Patentamt
European
Patent Office
Office européen
des brevets

(11)  **EP 2 272 587 A1**

(12)  **EUROPEAN PATENT APPLICATION**

(43) Date of publication:
**12.01.2011 Bulletin 2011/02**

(51) Int Cl.:
*B01J 23/00* (2006.01)     *B01J 23/72* (2006.01)
*B01J 35/00* (2006.01)     *C01B 7/04* (2006.01)

(21) Application number: **09008358.5**

(22) Date of filing: **26.06.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (71) Applicant: **Bayer MaterialScience AG**<br>**51368 Leverkusen (DE)**<br><br>(72) Inventors:<br>• **Pérez Ramírez, Javier**<br>  **43007 Tarragona (ES)**<br>• **Gómez Segura, Jordi**<br>  **08020 Barcelona (ES)** |

(54) **Catalyst for chlorine production comprising a copper aluminate of the spinel type**

(57)     The subject of the present invention is a catalyst for the production of chlorine from hydrogen chloride by thermocatalytic oxidation with oxygen comprising gases, wherein the catalyst is based on copper compounds, **characterized in that** the catalyst comprises copper II aluminate as catalytically active component, preferably copper aluminate of the spinel type.

The thus obtained copper based catalyst exhibits a stable activity in chlorine production applications, hence clearly superior to state-of-the-art copper based catalysts.

The superior resistance against activity deterioration is assigned to the presence of copper II aluminate as catalytically active component, preferably copper aluminates of the spinel type, namely $CuAl_2O_4$ or mixtures of $CuAl_2O_4$ and $CuAlO_2$, finely dispersed in diluting $Al_2O_3$. Contrary to the thus embedded $CuAl_2O_4$ and $CuAlO_2$ aluminates, which provide the stable redox activity, the strong deterioration behavior of state-of-the-art copper based catalysts is assigned to uncombined CuO on the catalyst surface, which can not contribute to a stable redox activity due to its prone to rapid volatilization.

EP 2 272 587 A1

**Description**

The present invention is based on known catalysts based on copper compounds, which are suitable for the production of chlorine from hydrogen chloride by thermocatalytic oxidation with oxygen comprising gases. The new catalyst comprises copper II aluminate as catalytically active component, preferably copper aluminate of the spinel type.

The process, developed by Deacon in 1868, of catalytic oxidation of hydrogen chloride with oxygen in an exothermic equilibrium reaction was at the beginning of industrial chlorine chemistry:

$$4 \, HCl + O_2 \rightarrow 2 \, Cl_2 + 2 \, H_2O$$

However, the Deacon process was pushed severely into the background by chlor-alkali electrolysis. Virtually the entire production of chlorine was by electrolysis of aqueous sodium chloride solutions (Ullmann Encyclopedia of Industrial Chemistry, seventh release, 2006). However, the attractiveness of the Deacon process has recently been increasing again, since worldwide demand for chlorine is growing faster than the demand for sodium hydroxide solution. The process for the preparation of chlorine by oxidation of hydrogen chloride, which is unconnected with the preparation of sodium hydroxide solution, satisfies this development. Furthermore, hydrogen chloride is obtained as a linked product in large quantities, for example, in phosgenation reactions, as in the preparation of isocyanate.

For industrial application the HCl oxidation catalyst should be characterized by a sufficient working-life (several years) and thus a sufficient stability. Despite wide activities in the field of applying copper based catalysts in the Deacon reaction, the developed copper based catalysts either have high activity but low stability / working life or high stability / working life but low activity.

GB 197251976 A describes catalyst compositions which are prepared by dry mixing an anhydrous cupric halide with an activated alumina and heating the mixture at 300-600 °C. To our best knowledge by applying the mentioned annealing temperature the obtained copper based catalyst compositions will be dominated by a highly active but unstable Cu(II) phase and thus a very restricted working life under typical HCl oxidation conditions.

DE102005040286 A describes a catalyst for gas phase reaction with high mechanical stability, which comprises active metals on a carrier comprising aluminum oxide, preferably alpha aluminum oxide, the active metal is ruthenium (preferred), copper and/or gold. The described catalyst can be used for the catalytic oxidation of hydrogen chloride with oxygen to chlorine at above 300 °C. To our best knowledge the intention of this invention is related to the mechanical properties of the carrier.

SU19701478688 A describes a spinel-type compound of formula $Me^{+2} \, Me^{+3}O_4$ where $M^{+2}$ is Cu, Fe, Cr, Co or Ni and $Me^{+3}$ is Al. Cr or Fe, which is characterized by high stability and thus high working life under typical HCl oxidation conditions. To our best knowledge, a spinel-type catalyst will be characterized by a high stability and thus working life but the activity of the pure, crystalline spinel phase as introduced by the inventors is very low, mainly due to its low specific surface area.

To our best knowledge the present invention is the first to overcome the before mentioned disadvantages commonly alleged to copper based catalysts.

As used herein, the singular terms "a" and "the" are synonymous and used interchangeably with "one or more." Accordingly, for example, reference to "a compound" herein or in the appended claims can refer to a single compound or more than one compound. Additionally, all numerical values, unless otherwise specifically noted, are understood to be modified by the word "about."

The subject of the present invention is a catalyst on the basis of copper compounds suitable for the production of chlorine from hydrogen chloride by thermocatalytic oxidation with oxygen comprising gases, wherein the catalyst is based on copper compounds, **characterized in that** the catalyst comprises copper II aluminate as catalytically active component, preferably copper aluminate of the spinel type.

The thus obtained copper based catalyst exhibits a stable activity in chlorine production applications, hence clearly superior to state-of-the-art copper based catalysts.

The superior resistance against activity deterioration is assigned to the presence of copper II aluminate as catalytically active component, preferably copper aluminates of the spinel type, namely $CuAl_2O_4$ or mixtures of $CuAl_2O_4$ and $CuAlO_2$, finely dispersed in diluting $Al_2O_3$. Contrary to the thus embedded $CuAl_2O_4$ and $CuAlO_2$ aluminates, which provide the stable redox activity, the strong deterioration behavior of state-of-the-art copper based catalysts is assigned to uncombined CuO on the catalyst surface, which can not contribute to a stable redox activity due to its prone to rapid volatilization.

A preferred catalyst is **characterized in that** the catalyst comprises $CuAl_2O_4$ or a mixture of $CuAl_2O_4$ and $CuAlO_2$.

In a further preferred embodiment of the invention the amount of $CuAl_2O_4$ in the catalyst is more than 50 mol %, particularly more than 70 mol %, in regard to the sum of $CuAl_2O_4$ and $CuAlO_2$.

A particular preferred catalyst additionally comprises $Al_2O_3$ as a diluting compound.

In this preferred variant of the catalyst the diluting compound $Al_2O_3$ is present in a mol relation of 2:1 to 1:10 in respect to the catalytically active component.

Another preferred form of the catalyst is **characterized in that** the catalyst further comprises alkali metal or earth alkali metal compounds, in particular alkali oxides or chlorides or earth alkali oxides or chlorides, particularly preferred lithium, lithium oxide or lithium chloride as promoting compounds.

Another particular preferred catalyst is **characterized in that** the catalytically active component and optionally the diluting compound are present on a carrier, in particular on a carrier on the basis of carrier material selected from one or more of the group: silicon dioxide, graphite, titanium dioxide with rutil or anatas structures, tin dioxide, zirconium dioxide, aluminum oxide, particularly $\alpha$-, $\gamma$- or $\delta$- aluminum oxide or mixtures of these carrier materials.

A further preferred variant of the catalyst is **characterized in that** the catalyst is present in the form of a shaped body, wherein the diameter or maximum cross section or width of the catalyst body is from 0.3 to 7 mm, preferably 0.8 to 5 mm on average.

Another embodiment of the invention is a process for the production of chlorine from hydrogen chloride by a thermocatalytic oxidation using an oxygen comprising gas, **characterized in that** a new catalyst according to invention as described herein is used.

Since the HCl oxidation is an equilibrium reaction, it is expedient to work at the lowest possible temperatures at which the catalyst still has a sufficient activity. It is furthermore expedient to employ oxygen in amounts in excess of the stochiometric amounts with respect to hydrogen chloride. For example, a two- to four-fold oxygen excess is conventional. Since no losses in selectivity are to be feared, it may be economically advantageous to operate under a relatively high pressure and accordingly with a longer residence time compared with normal pressure.

The catalytic oxidation of hydrogen chloride can preferably be carried out adiabatically or isothermally or approximately isothermally, discontinuously, but preferably continuously, as a fluidized or fixed bed process, preferably as a fixed bed process, particularly preferably in tube bundle reactors over heterogeneous catalysts at a reactor temperature of from 180 to 500 °C., preferably 200 to 450 °C., particularly preferably 250 to 450 °C., under a pressure of from 1 to 25 bar (1,000 to 25,000 hPa), preferably 1.2 to 20 bar, particularly preferably 1.5 to 17 bar and especially preferably 2.0 to 15 bar.

Conventional reaction apparatuses in which the catalytic oxidation of hydrogen chloride is carried out are fixed bed or fluidized bed reactors. The catalytic oxidation of hydrogen chloride can also preferably be carried out in several stages.

In the adiabatic and the isothermal or approximately isothermal procedure, several, that is to say 2 to 10, preferably 2 to 6, particularly preferably 2 to 5, in particular 2 to 3 reactors connected in series with intermediate cooling can be employed. The hydrogen chloride either can all be added together with the oxygen before the first reactor, or can be distributed over the various reactors. This connection of individual reactors in series can also be combined in one apparatus.

Suitable catalyst shaped bodies are shaped bodies of any desired shapes; tablets, rings, cylinders, stars, wagon wheels or balls are preferred, and rings, cylinders, balls or star strands are particularly preferred as the shape. The ball shape is preferred. The size of the catalyst shaped bodies, e.g. diameter in the case of balls or maximum cross-sectional width, is on average in particular 0.3 to 7 mm, very preferably 0.8 to 5 mm.

Alternatively to the finely divided catalyst (shaped) bodies described above, the support can also be a monolith of support material, e.g. not only a "classic" support body with parallel channels not connected radially to one another; monoliths also include foams, sponges or the like having three-dimensional connections within the support body, as well as support bodies with cross-flow channels. The monolithic support can have a honeycomb structure, and also an open or closed cross-channel structure. The monolithic support has a preferred cell density of from 100 to 900 cpsi (cells per square inch), particularly preferably from 200 to 600 cpsi. A monolith in the context of the present invention is disclosed e.g. in "Monoliths in multiphase catalytic processes-aspects and prospects" by F. Kapteijn, J. J. Heiszwolf T. A. Nijhuis and J. A. Moulijn, Cattech 3, 1999, p. 24.

The conversion of hydrogen chloride in a single pass can preferably be limited to 15 to 90%, preferably 40 to 90%, particularly preferably 60 to 90%. Some or all of the unreacted hydrogen chloride, after being separated off, can be recycled into the catalytic oxidation of hydrogen chloride. The volume ratio of hydrogen chloride to oxygen at the reactor intake is preferably 1:10 to 20:1, preferably 1:10 to 8:1, particularly preferably 1:5 to 2:1.

The heat of reaction of the catalytic oxidation of hydrogen chloride can be utilized in an advantageous manner for generating high pressure steam. This can be utilized for operation of a phosgenation reactor and/or of distillation columns, in particular of isocyanate distillation columns.

In a further step, the chlorine formed is separated off. The separating off step conventionally comprises several stages, namely separating off and optionally recycling of unreacted hydrogen chloride from the product gas stream of the catalytic oxidation of hydrogen chloride, drying of the stream obtained, comprising substantially chlorine and oxygen, and separating off of chlorine from the dried stream.

Unreacted hydrogen chloride and the water vapour formed can be separated off by condensing aqueous hydrochloric acid out of the product gas stream of the hydrogen chloride oxidation by cooling. Hydrogen chloride can also be absorbed in dilute hydrochloric acid or water.

For a more complete description of various preferred embodiments of a HCl oxidation process it is referred to several other published patent applications (e.g. US20070274901, US20070277551).

A further subject matter of the invention is a process for the production of a new catalyst as described herein. The process is carried out by

a) precipitation of a copper aluminates precursors from a copper salts and aluminum salts comprising solution by admixing an alkaline solution to said copper/aluminum salt comprising solution, wherein optionally a carrier material is present in the admixed solution,

b) optionally aging the precipitate of step a) over a time period of up to 100 hours, in particular up to 80 hours, particularly preferred up to 30 hours,

c) optionally drying of the precipitate of step a) and/or step b) at a temperature of at least 80 °C, preferably of at least 90 °C,

d) thermal annealing of the dried precipitate in the presence of an oxygen comprising gas at a temperature of at least 500 °C, preferably 600 °C to 1100 °C, particularly preferred at a temperature in the range from 700 to 1000 °C, and

e) optionally removing components from the thermally annealed precipitate of step d), in particular removing residues of copper oxide.

Below are described different particularly preferred preparation methods for the new catalyst:

Copper/alumina based catalysts having a superior stable activity are in general accessible by different preparation methods. Each of them include five basic steps, among them, two are mandatory. The preparation of those catalysts is certainly not limited to these five basic steps:

1) Preparation of the as-prepared catalyst sample.

2) Aging of the as-prepared catalyst sample.

3) Drying of the as-prepared or as-aged catalyst sample.

4) Thermal annealing of the as-prepared, as-aged or as-dried catalyst sample.

5) Extraction of uncombined CuO.

Steps 1 and 4 are mandatory. Preferred methods for the preparation of the as-prepared catalyst sample (step 1) are based on co-precipitation, surface impregnation, citric-acid-routes and sol-gel-routes respectively. The presence and the proportions of different Cu-Al-phases, their evolution, their embedding and thus the properties of the working catalyst can be controlled by the thermal annealing (step 4). Control variables are (e.g.) the annealing temperature, the oxygen content during the thermal annealing and the amount of diluting $Al_2O_3$. Steps 2, 3 and 5 are not mandatory, but can be beneficial for the properties of the catalyst sample.

Co-precipitation: One preferred method for the preparation of the as-prepared catalyst sample is based on co-precipitation. At least one solution, preferably an aqueous solution, comprising at least solved copper and alumina precursor species in the required molar ratio is brought about together with at least one alkaline solution, preferably an aqueous alkaline solution.

a. Preferably the copper-to-aluminum molar ratio is set in the range from 0.15 to 2, particular preferably in the range from 0.25 to 1. An alumina-to-copper molar ratio below the nominal molar stoichiometry of the spinel $CuAl_2O_4$ phase enhance the embedding of the spinel $CuAl_2O_4$ phase in diluting $Al_2O_3$ medium. Finely-dispersed $CuAl_2O_4$ lowers the lightoff temperature leading to higher HCl conversion levels.

b. Preferably the co-precipitation step is conducted at constant pH and temperature to reach a highly uniform quality of the as-prepared catalyst sample. A preferred setup to reach a highly uniform quality of the as-prepared catalyst sample is by continuous co-precipitation. If a batch co-precipitation is applied, the pH is preferably brought about from higher to lower values until the target pH is reached.

c. Preferably the pH of the solution containing the precipitates is adjusted in the range of 4 to 10, particular preferably in the range of 5 to 9. A pH in the preferred range is beneficial for the thermal annealing induced phase formation process. Finely-dispersed aluminum stabilized mixed oxides of copper in diluting $Al_2O_3$ medium are thus obtained by reaction at the $CuO$-$Al_2O_3$ interface. The degree of crystallinity of the Cu-Al-O constituents present in the catalyst varies with pH, thereby increasing from 5 to 9.

d. The cation-nitrates are mixed with the precipitating agent under continuous stirring preferably at 250-15000 rpm.

e. Preferred aqueous alkaline solutions that are used for the precipitation of the solved metal precursor include carbonates or hydroxides of sodium or potassium. Typical examples of the alkaline solution which can be hence used in the present catalyst preparation include either sodium or potassium carbonate or a mixture of both, alone or in combination of sodium hydroxide or potassium hydroxide, preferentially mixed in an equimolar ratio, and ammonium carbonate alone. Particular preferred aqueous alkaline solutions that are used for the precipitation of the solved metals contain sodium, potassium, or a combination thereof. Even more particular preferred is the co-precipitation from aqueous solutions of copper, aluminum and alkaline metal nitrates with an aqueous solution of triethylamine to control the amount of metal components. Ammonium based metal-free alkaline solutions are inferior to triethylamine based metal-free alkaline solutions, since triethylamine is not prone to form copper-ammonia complexes.

f. Preferred copper precursor components are water-soluble copper salts: copper nitrate, copper sulfate or copper chloride, preferred alumina precursor components are water-soluble alumina salts: alumina nitrate, alumina potassium sulfate, alumina sulfate, alumina ammonium sulfate or alumina chloride.

g. Preferably the precipitates are washed after the precipitation step, more preferably repeatedly.

h. Preferably a carrier is subjected to the flow of the solutions directly after combining them. Particular preferably the carrier is provided in a liquid, which is identical to the mother liquor. In continuous co-precipitation dispersal of the carrier can be conducted in either of the acid (metal nitrate solutions) or base reservoirs (aqueous solution containing the precipitating agent) depending on the carrier stability prior to the eventual precipitation in the mixing chamber or reactor. An application of a carrier is assigned to be beneficial for the catalytic performance, since heat-resistant catalysts and the surface area of the working catalyst could thus be tailored.

i. The as-made fresh sample can be also pre-shaped using activated charcoal as the template material by co-precipitation of an aqueous solution, comprising cation-nitrates stock solutions in the required molar ratio, with an alkaline solution to the desired pH value. Charcoal templates are subsequently removed by thermal annealing of the deposited fresh as-made sample to afford the catalyst.

The as-prepared catalyst sample thus obtained is preferably aged in the mother liquor.

a. Preferably the aging step is conducted under stirring.

b. Preferably the temperature is kept below 50°C during aging, particular preferably the temperature is kept below 30°C.

c. Preferably the aging is conducted for up to 100h, particular preferably for 0.5h to 10h.

The as-prepared or as-aged catalyst sample thus obtained is preferably dried above 50°C for at least 12 h, and 50-100°C is raised still more preferably.
The as prepared, as-aged or as-dried catalyst sample thus obtained is preferably implemented by adding an alkali metal to modify the interaction between the $CuO$ and $Al_2O_3$.

a. Doping with an alkali metal is preferably conducted by impregnation with a concentrated alkali salt solution, and even more preferably with a slight excess of solution. The solvent is preferably evacuated under continuous stirring in the range between 60-70 °C, and subsequently dried for at least 12 h at 70 °C.

b. Up to 15 wt% of alkali-salt with respect to the total weight of crude sample is preferably impregnated using metal chlorides.

Preferably the as-prepared, as-aged or as-dried catalyst sample is grind before it is subjected to the thermal annealing. The grinding is assigned to be beneficial for the accessibility of the catalyst sample to the annealing atmosphere.

The as-prepared catalyst sample thus obtained thereafter is subjected in particular to the following thermal annealing procedure.

c. Preferably the thermal annealing is conducted for at least 1h, more preferably in the range of 1h to 10h.

d. Preferably the temperature is set in the range of 500 °C to 1300 °C, particular preferably in the range of 700 °C to 1000 °C. Preferably the annealing atmosphere contains oxygen, particular preferably more than 10% oxygen, even more particular preferably the annealing is conducted in air. The indicated range of the annealing temperature is assigned to enhance the CuO and phase formation (tenorite) from crude powder samples in the presence of amorphous $Al_2O_3$, eventually leading to the spinel phase.

Surface impregnation: Another preferred method for the preparation of the as-prepared catalyst sample is based on surface impregnation. Preferably the content of copper oxide (CuO on $Al_2O_3$) is set less than 30 wt.%. The reaction layer occurring at the CuO/$\gamma$-$Al_2O_3$ interface forms $CuAl_2O_4$ which inhibits the diffusion of additional CuO into the $Al_2O_3$ support at higher CuO loadings. The as-prepared or as-aged catalyst sample thus obtained is preferably dried above 50°C for at least 12 h, and 50-120°C is raised still more preferably. The preferred annealing temperature range is set from 600 to 1000 °C.

Sol-gel-route: A further preferred method for the preparation of the as-prepared catalyst sample is based on sol-gel-routes. The reaction control of spinel formation at the expense of free CuO present in the catalyst in small-scale is easier to conduct by sol-gel method compared with co-precipitation method. But for large-scale the application of sol-gel-methods is limited by the complexibility of the process.

a. Preferably a colloidal dispersion of pseudo-boehmite powder in water with chemical composition corresponding to $Al_2O_3 \cdot H_2O$, or more preferably boehmite, AlO(OH), is used as a precursor component.

b. The boehmite sol is preferably prepared by peptizing with nitric acid in the pH range 3-3.5.

c. The mixed sol is preferably prepared by mixing the boehmite sol with the required amounts of the cation-nitrates aqueous solutions.

d. The precursor sol is preferably gelated using ammonia in the pH range 5-7.

e. The gel so formed is preferably concentrated with continuous stirring at 50-70 °C.

The (wet) gel obtained is preferably aged at room temperature for at least 24 h, and particularly more preferably in the range between 24-72 h.

The as-aged gel obtained is preferably dried below 100 °C, and more particularly, carefully dried at 70-80 °C in a hot air oven for at least 12 h to form the xerogel.

The xerogel obtained is preferably heat-treated in the temperature range 600-1200 °C, more preferably from 800-1200 °C for at least 1h in air. The complete transformation of boehmite xerogels into $\alpha$-$Al_2O_3$ along with the formation of $CuAl_2O_4$ spinel occurs in this temperature range.

Citric-acid-route: Nanocrystalline $CuAl_2O_4$ and $CuAlO_2$ powders are preferably synthesized by complexation route using citric acid allowing better homogeneity than by co-precipitation method. Citrate complexation reduces diffusive distance of linked metal cations in solid-state reaction with increasing the acid:metal molar ratio and calcination temperature.

a. Standardized solutions (1M) of the metal nitrates are mixed with citric acid at room temperature in a molar ratio of acid to total cations preferably ranging from 1 to 3 by wet complexation route.

b. The reaction of hydrolyzation and chelation is preferably conducted below 70 °C, more preferably at 50-70 °C, under continuous stirring for at least 30 min.

c. The pH value is preferably adjusted in the range 2-3 by addition of concentrated ammonia solution (~33% $NH_3$ in water).

d. The gel formed is preferably concentrated on a water bath with continuous stirring at 50-70 °C.

e. The cristallinity of the phases can be tailored by adding alkali metals. Preferably the nitrates of sodium and potassium and lithium as citrate hydrate.

The wet gel is particular preferably dried by temperature-programmed annealing from 70 °C to the prescribed temperature in the range 150-250°C, and further more preferably in the temperature range 200-250°C, and maintained at the prescribed temperature for at least 2 h with a heating rate in the range 0.5-10 °C $min^{-1}$.

Optionally the as-dried composite material is further dried in the range of 250-500 °C to remove residual organic matter. For the obtaining of crude powders of the cuprous aluminate $CuAlO_2$ and spinel phase $CuAl_2O_4$ the preferred annealing temperature is 600-1300 °C, maintained isothermal for at least 4 h.

Carbon-templated method: In a variant of the catalyst forming process a template route is preferably employed to generate high-surface-area materials in the range between 50 and 200 $m^2$ $g^{-1}$. Mesoporous carbon particles are preferably used implying non-porous or macroporous properties. This accounts for the formation of small-particle-size materials. Metal nitrate particles can partially fill the interparticle space of the porous system, thereby inducing mesoporosity. The carbon content is expressed as wt% based on the total weight of carbon and metal nitrates, preferably in the range between 25-50 wt%.

a. A fixed amount of carbon is impregnated with metal-cations dissolved in a minimum amount of solvent to afford a highly concentrated metal salt solution or the neat alkoxides. Preferably, metal nitrates in their form of more stable hydrates using aqueous-alcohol mixed solvents, and further more preferably in aqueous solution.

b. The coating of the carbon particles is achieved by impregnation using the solution of metal nitrates and co-precipitation by drop-wise addition of an alkaline aqueous solution under continuous stirring. The pH value is adjusted according to the co-precipitation method adopted for the non-templated samples.

c. By wet complexation using citric acid, dispersal of the carbon is induced by mechanical stirring at room temperature, added to the aqueous solution that results from the mix of metal nitrates and citric acid.

The carbon powder is preferably dried in air for at least 24 h in the range between 100-110 °C prior to thermal annealing.

A two-step temperature program is preferentially conducted to delay the carbon combustion. Initially, an inert flow is used while the temperature is ramped to 450 °C at a heating rate inferior to 5 °C $min^{-1}$. The gas is then switched to argon/air mixture and heated to 500 °C for at least 1 h using an excess of argon with respect to air (5:1). Defined solid-state phases can be formed preferably in the range between 700-1000 °C after at least 15 min of calcination.

Extraction of uncombined CuO: The aforementioned methods to synthesize embedded, dispersed spinel phases such as co-precipitation methods and impregnation method can lead to uncombined CuO remaining on the surface of the catalyst, which is prone to volatilize under HCl oxidation conditions. To remove uncombined CuO from the surface of the as-annealed catalyst samples, the samples are preferably washed with acidic solutions, Ammonium carbonate or concentrated hydrochloric acid are only prone to washing off the catalyst surface CuO in a highly-dispersed form. By $HNO_3$ both dispersed and crystalline CuO forms are removed.

Guard bed components or diluents: To minimize the effect of water condensation and the eventual catalyst coagulation owing to the shell of hydrogen-bonded hydroxides on the catalyst surface, guard bed components or diluents bearing Si and Al are raised to extend catalyst life, as is the improved flow and temperature distribution across face of catalyst or preventing the eventual catalyst coagulation. Particularly, $\alpha$-$Al_2O_3$ and $SiO_2$ (quartz) or molecular sieves. Molecular sieves are preferably used as guard bed components behind the reaction zone to trap volatile copper species under the gas-phase Deacon reaction conditions in the temperature range 150-400 °C, preferably 150-300 °C.

## EXAMPLES

In-situ X-ray diffraction characterisation: Identification of second phases and crystal structure of the catalyst samples was done by an in-situ X-ray diffraction method using a high temperature X-ray diffractometer equipped with a Seemann-Bohlin camera and an imaging plate. The diffractometer is capable of recording complete X-ray diffraction patterns every 1-2s using a Ni-filtered monochrome Cu-K$\alpha$ radiation source ($\lambda$ = 1.5406 A). Sample preparation consists of slight grinding by hand in a mortar/pestle and dispersal of the powder sample in ethanol. The suspension was cast onto a platinum heater strip and allowed to evaporate at room temperature.

Temperature programmed reduction ($H_2$-TPR): Temperature-programmed reduction with hydrogen ($H_2$-TPR) was carried out in a Thermo TPDRO 1100 system equipped with a thermal conductivity detector (TCD). Ca. 50 mg of powder sample was loaded in the quartz micro-reactor (11 mm i.d.), pre-treated in $N_2$ (20 ml STP min$^{-1}$) at 573 K for 30 min (heating ramp of 10°C min$^{-1}$), and cooled to 323 K in the same atmosphere. The analysis was done in a high-purity mixture of 5 vol.% $H_2$ in $N_2$ (50 ml STP min-1), ramping the temperature from 323 to 1173 K at 10 K min$^{-1}$.

Temperature-programmed activity screening: A sieve fraction (0.77 gram, 200-300 $\mu$m) of the catalyst sample was charged in a quartz glass reaction tube (inner diameter: 10 mm, preheating zone in front). Thereafter the catalyst sample inside the tube was exposed to a gas flow containing hydrogen chloride (2 L/h), oxygen (4 L/h) and nitrogen (4 L/h) under atmospheric pressure (Deacon conditions). Temperature-programmed reaction (TPR) was carried out by ramping the temperature of the reactor block from 60 °C to 450 °C at 10 °C min$^{-1}$ in the feed mixture. The amount of chlorine formed was determined quantitatively by on-line $Cl_2$ detection via optical absorbance measurements in the UV spectral region (ca. $\lambda$max. = 330 nm).

Isothermal screening: A fraction (0.5 gram) of the as-annealed catalyst sample was charged without any further treatment in a quartz glass reaction tube (inner diameter: 10 mm, preheating zone in front). A nitrogen gas flow (5 L/h) was supplied to the quartz glass reaction tube under atmospheric pressure (converted on the basis of 0 °C, 1 atm.). Thereafter the quartz glass reaction tube was heated with an electric furnace to the designated temperatures (set point of the furnace is given later on) and held for about 1 hour. Thereafter the catalyst sample inside the tube was exposed to a gas flow containing hydrogen chloride (2 L/h), oxygen (4 L/h) and nitrogen (4 L/h) under atmospheric pressure (Deacon conditions). The gas at the reaction outlet was sampled by passing it through an aqueous potassium iodide solution (20 wt.-%), The amount of chlorine formed was determined by iodometric titration. The Space Time Yield (STY) was calculated according to the following equation:

$$STY = chlorine\ [g/h]\ /\ catalyst\ amount\ [g]$$

Example 1 : Thermal annealing induced phase transformation

Catalyst samples based on co-precipitation were prepared by mixing an initial flow (4 L/h) of an aqueous solution containing the precursors in an alumina-to-copper molar ratio of 2 under vigorous agitation with a flow (8 L/h) of an aqueous alkaline solution of $Na_2CO_3$ (1M). The pH of the precipitate was kept at 5 ( example 1i), 7 (examples 1ii, 1iv) and 9 (example 1iii) respectively by adjusting the flow rate of the alkaline solution. The precipitates thus obtained were aged for 1 hour in the mother liquor, maintaining continuous magnetic stirring at room temperature. The precipitate was filtered off, subsequently rinsed with deionized water until a pH of 6-6.5 was reached and finally dried in an oven at 60 °C for 24 hours. The thus obtained as-dried catalyst samples were subjected to the in-situ X-ray characterization, wherein the catalyst samples were heated from 30 °C to 1400 °C at a rate of 60 °C/min. The temperature programmed annealing was performed under continuous flow of air (example1i-iii, 1v-ix) or $N_2$ ( example1iv) respectively.

(1i) Phase transformation of the as-dried catalyst sample (pH 5) during temperature programme annealing in air: The X-ray diffraction pattern of the as-dried catalyst sample gradually vanishes and becomes "amorphous" above 200 °C. Above 650 °C, the overall diffraction lines of $CuAl_2O_4$ appear and increase in intensity up to 1000 °C, thereafter remain unaltered up to 1100 °C. Upon further increase of temperature, the Bragg's reflections of $CuAl_2O_4$ gradually vanish, whereas those of $CuAlO_2$ (beta form) grow, indicating their coexistence in the 1200-1300 °C temperature range.

(1ii) Phase transformation of the as-dried catalyst sample (pH 7) during temperature programmed annealing in air: Below 500 °C no evidence of $CuO/Cu_2O$ phases or spinel phases has been found. The diffraction lines corresponding to the CuO phase appear at 500 °C, the intensity increases in the range of 500 °C to 700 °C and remains unaltered in the range of 700 °C to 1000 °C prior to a phase transformation into $Cu_2O$ at 1100 °C. At 1200 °C so far not assigned diffraction lines show up. The diffraction lines corresponding to the $CuAlO_2$ phase (beta form) appear at 700 °C, the intensity increases in the range of 700 °C to 1000 °C and remains unaltered up to 1200 °C prior to a decrease. Small peaks corresponding to the $CuAl_2O_4$ phase can be discriminated from the background, which increase in intensity from 800 °C to 1000 °C prior to a gradually intensity decay.

Under HCl oxidation reaction conditions residual tenorite (CuO) phase on the surface of the as-annealed catalyst sample (e.g. at 900 °C) transform into a copper chlorohydroxy compound $Cu_2Cl(OH)_2$, leading to a copper chloride hydrate $CuCl_2(H_2O)_2$, which is not beneficial for the overall performance of the catalyst, whereas the $CuAl_2O_4$ phase remains practically unaltered owing to the higher thermal stability, which is beneficial for the overall performance of the catalyst.

(1iii) Phase transformation of the as-dried catalyst sample (pH 9) during temperature programmed annealing in air: The dependence of the X-ray diffraction pattern on the annealing temperature is similar as already described (examplelii) with respect to second phases and crystal structure. A somewhat higher crystallinity is observed..

(1iv) Phase transformation of the as-dried catalyst sample (pH 7) during temperature programmed annealing in nitrogen: Below 500 °C no evidence of $CuO/Cu_2O$ phases or spinel phases has been found. The diffraction lines corresponding to the CuO phase appear at 500 °C, the intensity increases in the range of 500 °C to 600 °C, decreases thereafter and vanish at 800 °C. The diffraction lines corresponding to the $Cu_2O$ phase appear at 700 °C, the intensity increases in the range of 700 °C to 800 °C at the expense of the CuO phase, decreases thereafter and remains unaltered in the range of 1000 °C to 1200 °C. The diffraction lines corresponding to the $CuAlO_2$ and $CuAl_2O_4$ phases appear at 700 °C and 800 °C respectively, the intensities increase in the range of 700 °C to 1000 °C at the expense of the $CuO/Cu_2O$ phases and remain unaltered up to 1200 °C and 1100 °C respectively prior to a decrease of the latter.

(1v) Phase transformation of the as-dried catalyst sample (impregnation) during thermal annealing: Further catalyst samples were prepared by an impregnation method using a copper nitrate aqueous solution and $\gamma$-$Al_2O_3$, varying the loading amounts of CuO (wt.-% CuO in $CuO/Al_2O_3$): 1.23, 2.44, 5.88, 11.1, 20.0, 27.3, and 33.3%. The samples were dried at 120°C, ensued by thermal annealing for a couple of hours in the 400-900°C temperature range (100 °C steps).

Below 600 °C no clear evidence of the $CuAl_2O_4$ phase has been found. In the 600-800 °C temperature range the $CuAl_2O_4$ phase grows concomitantly with increasing calcination temperature at the expense of the CuO phase and shows no substantial intensity changes up to 900°C (CuO loading of 33%). For CuO loadings in the range of 5 to 20 wt.-% Cu from the initially existent CuO is nearly completely embedded into the $CuAl_2O_4$ phase at 800 °C. Below 5 wt.-% CuO loading diffraction lines are unincisive. For CuO loadings above 20 wt.-% the formed $CuAl_2O_4$ on the reaction layer at the $CuO/Al_2O_3$ interface inhibits the diffusion of CuO into the $Al_2O_3$ support, thus free CuO remains at the catalyst surface even up to 900 °C.

## Example 2: HCl oxidation induced phase transformation

A catalyst sample was prepared according to the co-precipitation method described in example 1. Thereby the pH of the precipitates was kept at 7 by adjusting the flow rate of the alkaline solution. The as-dried catalyst samples were annealed under a flow air of 15 L/h from room temperature to the designated temperature at 500 °C with a heating rate of 10 °C $min^{-1}$, held at the designated temperature for 5 hours and finally were cooled to room temperature inside the furnace. The as-annealed sample ( example 2i) thus obtained has been subjected to a temperature programmed activity screening and subsequently rinsed in hydrochloric acid (37%), leading to the pre-treated catalyst sample ( example 2ii). Both samples were characterized by XRD.

For the as-annealed catalyst sample 2i no diffraction lines indicate the presence of the spinel $CuAl_2O_4$ phase, which has been expected, since the annealing temperature has been too low. Bragg's diffraction peaks show up at 35.54° and 38.75° corresponding to CuO (tenorite) phase. On the contrary, the XRD pattern of the pre-treated catalyst sample 2ii shows drop of intensity peaks of the tenorite CuO phase, whereas the Bragg's diffraction lines (220), (311) and (400) corresponding to the spinel phase are present. Thus under exothermic, oxygen-rich HCl catalytic oxidation conditions the Cu of initially existent CuO phase can partially be embedded into a $CuAl_2O_4$ phase.

## Example 3: Catalytic performance of the unsupported spinel phases

For a comparison of the catalytic performance of the different spinel phases, catalyst samples predominantly exhibiting $CuAl_2O_4$ and $CuAlO_2$ as representative pure phases or embedded in diluting $Al_2O_3$ medium have been prepared by the amorphous citrate process proposed by Marcilly *et al.* (Marcilly, C., Courty, P., and Delmon, B., J. Am. Ceram. Soc., 53, 56 (1970)) and further adopted by Patrick and Gavalas (Patrick, V., and Gavalas, G., J. Am. Ceram. Soc., 73, 358 (1990)) towards the obtaining of crystalline $CuAl_2O_4$. Citric acid was added equimolar to the sum of copper and alumina nitrate ions in a minimum amount of water (less than 20 $cm^3$ with respect to 240 mmol of citric acid). The solution was gradually solidified upon evacuation under a pressure of 0.7 kPa at 70°C in a rotary evaporator. The resulting foam was broken up and calcined at 1100 °C for 4 h in air. The nominal molar copper-alumina-ratio was varied: Cu/Al = 1 ( example3i), Cu/Al = 2 ( example3ii), Cu/Al = 4 ( example3iii).

The as-annealed catalyst samples thus obtained were characterized by XRD. $CuAlO_2$ was the dominant phase at a nominal molar Cu/Al ratio of 1, $CuAl_2O_4$ plus traces of $CuAlO_2$ were the dominant phases at a nominal molar Cu/Al ratio of 1/2, and $CuAl_2O_4$ imbedded in diluting $\alpha$-$Al_2O_3$ medium was the dominant phase at a nominal molar Cu/Al ratio of ¼.

Some of the as-annealed catalyst samples ( examples 3i-ii) thus obtained has been subjected to a temperature programmed activity screening. The light-off temperature of the catalyst sample ( example 3i, 390 °C) was about 40 °C higher than the light-off temperature of the catalyst sample ( example 3ii, 350 °C)), indicating that the pure $CuAl_2O_4$ spinel phase is far more active than the pure $CuAlO_2$ phase.

**Example 4: Reduction properties of catalyst samples comprising pure and mixed phases**

Catalyst samples were prepared according to the citric acid-route described in the example 3. Thereby the nominal molar copper-alumina-ratio was varied: Al/Cu = 1 ( example 4i), Al/Cu = 2 ( example 4ii), Al/Cu = 3 ( example 4iii), Al/Cu = 10 ( example 4iv).

Further catalyst samples were prepared according to the co-precipitation method described in the example 1. Thereby the pH of the precipitates was kept at 7 ( examples 4v-x). The as-dried catalyst samples were annealed under a flow air of 15 L h$^{-1}$ from room temperature to the designated temperature with a heating rate of 10 °C min$^{-1}$, held at the designated temperature for 5 hours and finally were cooled to room temperature inside the furnace. The designated annealing temperature was varied in the range of 600 °C to 1300 °C.

Further catalyst samples ( example 4xi) were prepared according to the impregnation method described in the example 1. The thermal annealing temperature was varied between 700° C and 900 °C.

The reduction properties of the as-annealed catalyst samples were characterized by temperature programmed reduction ($H_2$-TPR) experiments.

**(examples 4i-iv) Reduction properties of the bulk reference catalyst samples comprising pure phases (citric acid route):** The catalyst sample 4i exhibits a single TPR peak at 700-750 °C, indicating the bulk $CuAlO_2$ phase. With increasing aluminum content a second broad TPR peak show up at 400-550 °C, indicating that the $CuAl_2O_4$ ( example 4ii) phase grows at the expense of the $CuAlO_2$ phase. Dispersed $CuAl_2O_4$ (lower reduction temperature) and crystalline $CuAl_2O_4$ phase (higher reduction temperature) contribute both to that broad TPR peak. At a molar Cu/Al-ratio of 1/10 the latter is not existent and the catalyst exhibit a single TPR peak at 420-470 °C, indicating dispersed $CuAl_2O_4$. A lower reduction temperature is commonly indicative of higher activity; thus a dilution of the (stable) $CuAl_2O_4$ phase with $Al_2O_3$ is beneficial for the activity of the catalyst.

**(examples 4v-x) Reduction properties of the bulk catalyst samples comprising mixed phases (co-precipitation):** For the catalyst samples co-precipitated at pH 7 using a Cu/Al ratio of ½, and annealed in the 600-800 °C temperature range ( examples 4v-vii) only one TPR peak corresponding to the CuO phase is present at 270-325 °C. Two new TPR peaks show up after annealing at 900 °C and 1000 °C ( examples 4viii-x), indicating highly dispersed and thus easily reducible $CuAl_2O_4$ (370-390 °C) and a crystalline $CuAl_2O_4$ phase (470-500 °C).

**(4xi) Reduction properties of the supported catalyst samples comprising mixed phases (impregnation):** The $H_2$-TPR profile traces three different peaks, $\alpha_1$ (230-255 °C), $\alpha_2$ (275-300 °C), and β (450-490 °C). TPR peaks $\alpha_1$, $a_2$ and β are assigned to the reduction of highly dispersed CuO, crystalline CuO and $CuAl_2O_4$, respectively. Below 600 °C only $\alpha_1$, $a_2$ are existent, indicating CuO. Above 600 °C the intensity of β grows with increasing calcination temperature at the expense of $\alpha_2$. TPR peak $\alpha_1$ is present over the whole temperature range (400-900 °C), indicating that the highly dispersed CuO is not embedded into $CuAl_2O_4$, due to hindered diffusion at the reaction boundary (we refer to example Iv). Due to the higher cristallinity, the reduction temperature of the $CuAl_2O_4$ phase prepared via impregnation is far above the reduction temperature range of the $CuAl_2O_4$ prepared via co-precipitation.

**Example 5 (part 1): Influence of the annealing temperature on the catalytic performance**

Catalyst samples were prepared according to the co-precipitation method described in the example 1. Thereby the pH of the precipitates was kept at 7 by adjusting the flow rate of the alkaline solution. The as-dried samples were annealed under a flow air of 1 L h$^{-1}$ from room temperature to the designated temperature with a heating rate of 10 °C min$^{-1}$, held at the designated temperature for 5 hours and finally were cooled to room temperature inside the furnace. The annealing temperature was varied: 600 °C ( example 5i), 700 °C ( example 5ii), 900 °C ( example 5iii), 1000 ( example 5iv), 1100 °C ( example 5v), 1200 °C ( example 5vi).

The as-annealed catalyst samples thus obtained have been subjected to a temperature programmed activity screening. The light-off temperature increases with increasing thermal annealing temperature from about 280 °C ( example 5i) to 370 °C ( example 5vi). For the catalyst samples 5i and 5ii a first (unstable) maximum HCl conversion is reached at 420-440 °C; at higher temperatures the nucleation of the spinel $CuAl_2O_4$ phase starts (we refer to example 2) and the conversion-temperature-relationship converged to that of the samples 5iii-v. The best overall catalytic performance (regarding activity and (phase) stability) is thus achieved by thermal annealing in the range of 700 °C to 1000 °C. Hence the catalyst samples leading preferably the $CuAl_2O_4$ phase show the best catalytic performance.

Some of the as-annealed catalyst samples ( examples 5ii, 5iii, 5vi) have been subjected to an isothermal stability screening at 420 °C. Thereby the catalyst amount has been set to 500 mg, the gas composition / flow has been set to $HCl/O_2/N_2$ = 1/2/2 L/h. For the catalyst sample ( example 5ii) an induction period of about 20h to 25h has been observed characterized by a steady STY-increase, thereafter the STY remained stable. We attribute the induction period to the gradually phase transformation of CuO phase with $Al_2O_3$ into the spinel $CuAl_2O_4$ phase under the reaction conditions (we refer to the example 2). For the other catalyst samples ( examples 5iii, 5vi) no clear induction period has been observed. No activity deterioration has been observed for all catalyst samples over a period of 150h TOS (table below).

Catalyst sample 5vi has a somewhat lower activity due to the higher annealing temperature, and thus higher content of $CuAlO_2$ phase.

| Example | STY [g/gh] after 1h | STY [g/gh] after 50h | STY [g/gh] after 150h |
|---------|---------------------|----------------------|-----------------------|
| (5ii) | 2.45 | 2.95 | 3.00 |
| (5iii) | 3.1 | 3.1 | 3.05 |
| (5vi) | 2.05 | - | 1.95 |

**Example 5 (part 2, comparison example): State-of-the-art catalyst**

Catalyst samples were prepared by a method which is based on incipient wetness. For the preparation of the as-prepared catalyst samples, aluminum oxide powder (each 5g, supplier, characteristics) was placed into basins. Aqueous solutions of copper nitrate were added dropwise to the alumina oxide powder, until the pores has been filled. The as-prepared catalyst samples were dried at 100 °C for 24 hours at reduced pressure (100 mbar absolute). The as-dried catalyst samples were heated to 500 °C with a heating rate of 2 °C/min, held for 5 hours at 500 °C and thereafter cooled to room temperature inside the furnace. The copper loading has been varied (Cu-content based on $Cu0/Al_2O_3$): 7.5 wt.-% ( example 5vii), 12.5 wt.-% ( example 5viii)

The as-annealed catalyst samples thus obtained ( examples 5vii-viii) have been subjected to an isothermal stability screening. Thereby the temperature has been set to 420 °C, the catalyst amount has been set to 0.5g and the gas flow has been adjusted to 10 L/h ($HCl/O_2/N_2$ = 2/4/4). Accompanied by a huge cooper loss the calculated STY drop for both catalyst samples linearly from 2.0 g/gh ( example i) and 3.0 g/gh ( example ii) respectively to 0.8 g/gh ( example i) and 1.1 g/gh ( example ii) respectively after 45h TOS. This experiment point out, that uncombined (highly dispersed) CuO on the catalyst surface, which is obtained by the applied preparation method, is prone to volatilization and hence has an inferior catalytic performance compared to the catalyst according to the invention.

**Example 6: Influence of the thermal annealing atmosphere on the catalytic performance**

Catalyst samples were prepared according to the co-precipitation method described in the example 1. Thereby the pH of the precipitates was kept at 7 by adjusting the flow rate of the alkaline solution. The as-dried catalyst samples were annealed under a flow of 15 L h$^{-1}$ containing 0 Vol.-% oxygen ( example 6i), 5 Vol.-% oxygen ( example 6ii), 10 Vol.-% oxygen ( example 6iii), 15 Vol.-% oxygen ( example 6iv) and 20 Vol.-% oxygen ( example 6v) respectively balanced with nitrogen to 100 Vol.-% from room temperature to 700 °C with a heating rate of 10 °C min$^{-1}$, held for 5 hours at 700 °C and were thereafter cooled to room temperature under the aforementioned atmosphere inside the furnace.

The $H_2$-TPR profile of the sample annealed by nitrogen exhibits three main different peaks, $\alpha_1$ (260 °C), $\alpha_2$ (294 °C) and $\gamma$ (650 °C), $\alpha_1$, $\alpha_2$ and $\gamma$ are attributed to the reduction of finely-dispersed CuO, crystalline CuO and $CuAlO_2$, respectively. The high temperature TPR peak $\gamma$ is not present in the samples that were thermal annealed under oxidizing conditions (oxygen content of 5 vol.-% or above). In the presence of 5 Vol.-% oxygen, the intensity of TPR peak $\alpha_1$ is low if compared to oxygen-free conditions, at higher oxygen contents the peak $\alpha_1$, even diminish, With increasing oxygen content and at the expense of $\alpha_{1/2}$, a TPR peak $\beta$ (350-400 °C), attributed to $CuAl_2O_4$ spinel grows,.thereby shifting to higher temperatures due to the increase in crystallinity. Hence a somewhat lower oxygen partial pressure than in available in (synthetic) air is beneficial for the reduction properties of the $CuAl_2O_4$ phase, but limit the phase transformation of CuO into the spinel $CuAl_2O_4$ phase.

**Example 7: Influence of the CuAl2O4 dispersion on the catalytic performance**

Catalyst samples were prepared according to the co-precipitation method described in the example 1. Thereby the Cu/Al ratio was set to 0.3/2 ( example 7i), 0.5/2 ( example 7ii) and 1/2 ( example 7iii) respectively and the pH of the precipitates was kept at 7 by adjusting the flow rate of the alkaline solution. The as-dried catalyst samples were annealed under a flow air of 15 L h$^{-1}$ from room temperature to 900 °C with a heating rate of 10 °C min$^{-1}$, held at 900 °C for 5 hours and thereafter were cooled to room temperature inside the furnace.

The catalyst samples thus obtained have been subjected to temperature programmed activity screening. The lowest light-off temperature is observable for the sample 7i (310 °C), followed by the sample 7ii (+10 °C) and 7iii (+30 °C), despite the significantly increasing copper content in the same order. We attribute the clear lowering of the light-off temperature to an enhanced embedding of the spinel $CuAl_2O_4$ in diluting $Al_2O_3$ medium, which is accompanied by a shift of the reduction temperature of the $CuAl_2O_4$ phase to lower temperatures (we refer to the example 4).

**Example 8: Influence of alkali-based dopants on the catalytic performance of copper**

The samples were prepared by the citrate gel method as applied in example 3 using the molar ratios of Cu/Al = 0.25 (0.5:1 $CuO/Al_2O_3$) and $M^+/Al$ = 0.05 (where $M^+$ is $Li^+$, $Na^+$ or $K^+$) and calcined at 900 °C.

The as-annealed catalyst samples thus obtained were characterized by XRD. Doping with K cations ( example 8i) reduces the cristallinity, doping with Na cations ( example 8iii), and more particularly with Li cations ( example 8iv) increases the crystallinity of the parent sample undoped ( example 8ii). The influence on the crystallinity of the spinel phase $CuAl_2O_4$ thus is correlated to the atomic radii according to the series $Li^+<Na^+<K^+$.

The reduction properties of the as-annealed catalyst samples were characterized by temperature programmed reduction ($H_2$-TPR) experiments. The TPR revealed 5 different peaks: $\alpha_1$ (190-230 °C), $\alpha_2$ (230-300 °C), indicating dispersed and crystalline CuO phases, $\beta_1$ (>350 °C) and $\beta_2$ (>450 °C), indicating dispersed and crystalline $CuAl_2O_4$ phases and $\gamma$ (>700 °C) indicating a $AlCuO_2$ phase. For the sample exhibiting the highest cristallinity ( example 8iv, Li cation doping) $\beta_1$ is not observable; in accordance to the increase in cristallinity ( example from 8i to 8iii) β, is shifted to higher temperature. On the contrary, $\beta_2$ is not observable for the sample exhibiting the lowest cristallinity ( example 8i, K cation doping) and the $\beta_2/\beta_1$ ratio increases clearly with increasing cristallinity.

The as-annealed samples has been subjected to a temperature-annealing. The general trend in light-off temperature is in accordance with the shift of the $\beta_1$ peak as observed in TPR-experimentation: 8i (K cation doping, 310 °C), 8ii (undoped sample, 350 °C), 8iii (Na cation, 330 °C), 8iv (Li cation, 360 °C) .

**Claims**

1. Catalyst on the basis of copper compounds suitable for the production of chlorine from hydrogen chloride by thermocatalytic oxidation with oxygen comprising gases,
   **characterized in that** the catalyst comprises copper II aluminate as catalytically active component, preferably copper aluminate of the spinel type.

2. Catalyst according to claim 1, **characterized in that** the catalyst comprises $CuAl_2O_4$ or a mixture of $CuAl_2O_4$ and $CuAlO_2$.

3. Catalyst according to one of claim 1 to 2, **characterized in that** the amount of $CuAl_2O_4$ is more than 50 mol %, particularly more than 70 mol %, in regard to the sum of $CuAl_2O_4$ and $CuAlO_2$,

4. Catalyst according to one of claims 1 to 3, **characterized in that** the catalyst additionally comprises $Al_2O_3$ as a diluting compound.

5. Catalyst according to claim 4, **characterized in that** the diluting compound $Al_2O_3$ is present in a mol relation of 2: 1 to 1:10 in respect to the catalytically active component

6. Catalyst according to one of claims 1 to 5, **characterized in that** the catalyst further comprises alkali metal or earth alkali metal compounds, in particular alkali oxides or chlorides or earth alkali oxides or chlorides, particularly preferred lithium, lithium oxide or lithium chloride as promoting compounds.

7. Catalyst according to one of claims 1 to 6, **characterized in that** the catalytically active component and optionally the diluting compound are present on a carrier, in particular on a carrier on the basis of carrier material selected from one or more of the group: silicon dioxide, graphite, titanium dioxide with rutil or anatas structures, tin dioxide, zirconium dioxide, aluminum oxide, particularly $\alpha$-, $\gamma$- or $\delta$- aluminum oxide or mixtures of these carrier materials.

8. Catalyst according to one of claims 1 to 7, **characterized in that** the catalyst is present in the form of a shaped body, wherein the diameter or maximum cross section or width of the catalyst body is from 0.3 to 7 mm, preferably 0.8 to 5 mm on average.

9. Process for the production of a catalyst according to one of claims 1 to 8, carried out by

   a) precipitation of a copper aluminates precursors from a copper salts and aluminum salts comprising solution by admixing an alkaline solution to said copper/aluminum salt comprising solution, wherein optionally a carrier material is present in the admixed solution,
   b) optionally aging the precipitate of step a) over a time period of up to 100 hours, in particular up to 80 hours, particularly preferred up to 30 hours,

c) optionally drying of the precipitate of step a) and/or step b) at a temperature of at least 80 °C, preferably of at least 90 °C,

d) thermal annealing of the dried precipitate in the presence of an oxygen comprising gas at a temperature of at least 500 °C, preferably 600 °C to 1100 °C, particularly preferred at a temperature in the range from 700 to 1000 °C,

and

e) optionally removing components from the thermally annealed precipitate of step d), in particular removing residues of copper oxide.

10. Process for the production of chlorine from hydrogen chloride by a thermocatalytic oxidation using an oxygen comprising gas, **characterized in that** a catalyst according to one of the claims 1 to 8 is used.

11. Process according to claim 10, **characterized in that** the catalytic oxidation is carried out in a reactor wherein the reactor temperature is chosen in the range from 180 to 500 °C, preferably 200 to 450 °C, particularly preferably 250 to 450 °C.

12. Process according to claim 10 or 11, **characterized in that** the catalytic oxidation is carried out at a pressure of from 1 to 25 bar, preferably 1.2 to 20 bar, particularly preferred from 1.5 to 17 bar, especially preferred from 2 to 15 bar.

Europäisches
Patentamt

European
Patent Office

Office européen
des brevets

# EUROPEAN SEARCH REPORT

Application Number

EP 09 00 8358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SU 331 649 A1 (CHERNYUK G P) 5 November 1976 (1976-11-05) * abstract * * column 2, lines 13-22 * * column 2, line 23 - column 3, line 21 * | 1,6, 10-12 | INV. B01J23/00 B01J23/72 B01J35/00 C01B7/04 |
| Y | | 1,10 | |
| X | US 4 308 176 A (KRISTIANSEN LEIF A) 29 December 1981 (1981-12-29) * abstract * * column 3, line 39 - column 4, line 2 * * column 4, lines 11,12 * * column 8, lines 42-48 * * column 8, line 66 - column 9, line 41 * * examples 1,2 * | 1-5,8,9 | |
| Y | | 1,10-12 | |
| X | AWAD I AHMED: "Structural and surface aspects of thermally treated copper aluminium mixed hydroxides" CANADIAN JOURNAL OF CHEMISTRY, NATIONAL RESEARCH COUNCIL. OTTAWA, CA, vol. 69, 1 January 1991 (1991-01-01), pages 1511-1515, XP009123047 ISSN: 0008-4042 * abstract * * page 1511, right-hand column, lines 2-17 * * page 1512, left-hand column, lines 12-33 * * figure 2 * | 1-5,9 | TECHNICAL FIELDS SEARCHED (IPC) B01J C01B |
| Y | | 1,10 | |

-/--

The present search report has been drawn up for all claims

| Place of search | Date of completion of the search | Examiner |
|---|---|---|
| Munich | 2 October 2009 | Schnitzlbaumer, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 09 00 8358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 439 172 A (ICI LTD)<br>9 June 1976 (1976-06-09)<br>* page 1, lines 15-20 *<br>* page 2, lines 5-9,62-67,88-108,112-125 *<br>* page 4, lines 47-54 *<br>* example 1 * | 1-7 | |
| Y | | 1,10-12 | |
| Y | GB 1 192 666 A (SIR SOC ITALIANA RESINE SPA [IT]) 20 May 1970 (1970-05-20)<br>* page 1, lines 9-11 *<br>* examples 1-5 *<br>----- | 10-12 | |
| | | | TECHNICAL FIELDS SEARCHED (IPC) |

The present search report has been drawn up for all claims

| Place of search | Date of completion of the search | Examiner |
|---|---|---|
| Munich | 2 October 2009 | Schnitzlbaumer, M |

EPO FORM 1503 03.82 (P04C01)

**ANNEX TO THE EUROPEAN SEARCH REPORT
ON EUROPEAN PATENT APPLICATION NO.**

EP 09 00 8358

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2009

| Patent document cited in search report | | Publication date | Patent family member(s) | | Publication date |
|---|---|---|---|---|---|
| SU 331649 | A1 | 05-11-1976 | NONE | | |
| US 4308176 | A | 29-12-1981 | AU | 541472 B2 | 10-01-1985 |
| | | | AU | 6860381 A | 01-10-1981 |
| | | | BR | 8101848 A | 29-09-1981 |
| | | | CA | 1144911 A1 | 19-04-1983 |
| | | | DD | 157669 A5 | 01-12-1982 |
| | | | DE | 3166670 D1 | 22-11-1984 |
| | | | DK | 139481 A | 29-09-1981 |
| | | | EG | 15174 A | 31-12-1985 |
| | | | EP | 0042471 A1 | 30-12-1981 |
| | | | ES | 8202492 A1 | 01-05-1982 |
| | | | HU | 188660 B | 28-05-1986 |
| | | | IN | 155595 A1 | 16-02-1985 |
| | | | JP | 1501695 C | 28-06-1989 |
| | | | JP | 56158147 A | 05-12-1981 |
| | | | JP | 63054420 B | 27-10-1988 |
| | | | NO | 800905 A | 29-09-1981 |
| | | | NO | 146046 A | |
| | | | ZA | 8102077 A | 28-04-1982 |
| GB 1439172 | A | 09-06-1976 | NONE | | |
| GB 1192666 | A | 20-05-1970 | NONE | | |

EPO FORM P0459

For more details about this annex : see Official Journal of the European Patent Office, No. 12/82

**EP 2 272 587 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 197251976 A
- DE 102005040286 A
- SU 19701478688 A
- US 20070274901 A
- US 20070277551 A

**Non-patent literature cited in the description**

- **Ullmann.** Encyclopedia of Industrial Chemistry. 2006
- **F. Kapteijn ; J. J. Heiszwolf ; T. A. Nijhuis ; J. A. Moulijn.** Monoliths in multiphase catalytic processes-aspects and prospects. *Cattech,* 1999, vol. 3, 24
- **Marcilly, C. ; Courty, P. ; Delmon, B.** *J. Am. Ceram. Soc.,* 1970, vol. 53, 56
- **Patrick, V. ; Gavalas, G.** *J. Am. Ceram. Soc.,* 1990, vol. 73, 358

17